Europäisches Patentamt

European Patent Office

Office européen des brevets

(11) Publication number: **0 004 412**
A1

# EUROPEAN PATENT APPLICATION

(21) Application number: 79300081.1

(22) Date of filing: 17.01.79

(51) Int. Cl.²: **F 16 H 37/00,** F 16 H 3/08, F 16 H 3/38

(30) Priority: 21.01.78 GB 252478

(43) Date of publication of application: 03.10.79 Bulletin 79/20

(84) Designated Contracting States: DE FR GB IT NL SE

(71) Applicant: GKN Transmissions Limited, P.O. Box 405 Chester Road, Erdington, Birmingham B24 0RB (GB)

(72) Inventor: Abbott, Randle Leslie, The Cottage Ash Lane No Mans Heath, Nr.Tamworth Staffordshire (GB)

(74) Representative: Robertson, Bernard Collett et al, Guest, Keen & Nettlefolds Limited Group Head Office P.O. Box 55, Smethwick, Warley West Midlands B66 2RZ (GB)

(54) Continuously variable transmission mechanisms.

(57) A continuously variable transmission mechanism incorporates a variator (12) and several fixed ratio transmission paths (14, 15, 17, 21, 22, 23, 115, 117, 121, 122) which can connect an input (10) to the variator (12) and the variator to an output (11). There is one path of ratio $R_1$ from the input to the first variator sheave (18) for use in conjunction with a second path of ratio $R_2$ from the second variator sheave (20) to the output (11). A third path of ratio $R_3$ from the input member to the second variator sheave (20) is to be used in conjunction with a fourth path of ratio $R_4$ from the first variator sheave (18) to the output member (11). One extreme usable variator ratio is defined as $1/R_v$ and the ratios $R_1$ to $R_4$ are such that $R_1 1/R_vR_2 = R_3R_vR_4$. In this way a change from a first mode of operation using the first and second paths to a second mode of operation using the third and fourth paths can occur at a variator ratio $1/R_v$ without changing the overall transmission ratio.

P78.02/ABC Continuously Variable Transmission Mechanisms

The invention relates to continuously variable transmission mechanisms which are of the kind comprising an input member, a variator with first and second sheaves of variable diameters and a flexible band connecting the sheaves together, an output member and selectively engageable fixed ratio transmission paths between the input member and the variator and between the variator and the output member to enable the transmission to operate in different modes to extend the ratio range of the transmission mechanism beyond the ratio range of the variator and to permit synchronous changes from one mode to another. Synchronous changes are changes in mode which can be effected without altering the speeds of between components which are being engaged and disengaged to effect the change of mode.

A transmission mechanism of this kind is known from United States Patent 3,340,749. This known transmission mechanism is of the split torque type in that power from the input to the output is transmitted through two parallel transmission paths and in some conditions of operation large amounts of power circulate between the two paths. A transmission mechanism which makes use of power circulation tends to be inefficient in that parts of the mechanism are very highly loaded and result in substantial power losses. To cater for this circulating power, it is also necessary for the transmission components to be particularly strong and to have a high resistance to wear so that the components tend to be large, heavy and costly.

The present invention is concerned with the provision of a transmission mechanism of the type under consideration which is simple but effective and does not suffer from the above mentioned drawbacks.

According to the invention a continuously variable transmission mechanism of the kind incorporating an input member, a variator having first and second sheaves of variable diameters and a flexible band connecting the sheaves together and having a maximum usable transmission ratio at one extreme of $1/R_v$, an output member, selectively engageable fixed ratio transmission paths between the input member and the variator and between the variator and the output member to enable the transmission mechanism to operate in different modes to extend the ratio range of the mechanism beyond the ratio range of the variator and to permit synchronous ratio changes from one mode to another is characterised in that the selectively engageable fixed ratio transmission paths include a first path of ratio $R_1$ from the input member to the first variator sheave for use in conjunction with a second path of ratio $R_2$ from the second variator sheave to the output, a third path of ratio $R_3$ from the input member to the second variator sheave to be used in conjunction with a fourth path of ratio $R_4$ from the first variator sheave to the output, the ratios $R_1$ to $R_4$ being such that

$$R_1 \; 1/R_v \; R_2 = R_2 \; R_v \; R_4$$

so that a change from a first mode of operation using the first and second paths to a second mode of operation using the third and fourth paths can occur at a variator ratio $1/R_v$ without change in the overall transmission ratio.

In the preceding paragraph and throughout this specification ratios are specified as reduction speed ratios. Thus

$R_1$ is a reduction ratio and $1/R_v$ represents a step-up ratio of $R_v$.

Particular ratios of $R_1$ to $R_4$ can be selected to provide a simplified structure with certain gears of the same size. Preferably $R_1 = R_2 = R_v$ and $R_3 = R_4 = 1$. In such a situation, a synchronous change from one mode to another takes place when the overall transmission ratio is equal to $R_v$. This ratio $R_v$ is preferably of the order of 2:1. In one typical example $R_1$ and $R_2$ are provided by the engagement of two gear wheels having 59 and 27 teeth respectively so that $R_1 = R_2 = 2.185$. In such a situation $R_v$ should also be 2.185.

If the range of usable variator ratios is symmetrical in that the variator ratio can be varied from $1/R_v$ to $R_v$, the range of ratios available in the forward mode of operation is from $R_1 R_v R_2$ to $R_1 1/R_v R_2$. In the case where $R_1 = R_2 = R_v$, this ratio range becomes $R_v^3$ to $R_v$. In the higher ratio mode of operation, the range of ratios is from $R_3 R_v R_4$ to $R_3 1/R_v R_4$. When $R_3 = R_4 = 1$ this reduces to a range of $R_v$ to $1/R_v$. In this way, using both modes, a total ratio range is available from a ratio of $R_v^3$ (reduction) to a ratio of $1/R_v$ (equal to an overdrive or step-up ratio of $R_v$). In the example quoted, this provides a maximum reduction of 10.43:1 and a maximum overdrive ratio of 2.185:1.

The first, second, third and fourth paths respectively may be constituted by (a) a first gear co-axial with the first sheave, connectable thereto by a first clutch and meshing with an input gear; (b) a second gear co-axial with the second sheave, connectable thereto by a second clutch and meshing with an output gear; (c) a third gear co-axial with the second sheave, connectable thereto by a third clutch and meshing with the input gear; (d) a fourth gear co-axial with the first sheave, coupled thereto by a fourth clutch and meshing with the output gear. The output gear may be arranged on an output shaft which extends between the two sheaves. This arrangement results in a compact transmission mechanism with the output shaft parallel to and close to the axis of the input shaft.

The input to the transmission may also incorporate a fluid coupling at the input to the mechanism to facilitate starting of a vehicle from rest and also to smooth out any shocks associated with changing from one mode to another. No shocks should occur if perfect synchronisation can be achieved between the release of the first and second clutches and the engagement of the third and fourth clutch or vice versa but perfect synchronisation is normally difficult to achieve. The fluid coupling may incorporate a centrifugally operable lock up clutch to prevent power loss in the coupling at high speed.

Reverse drive may be provided by means of a further gear on the input shaft meshing via a reversing idler gear with a fifth gear which is co-axial with the first variator sheave and connectable thereto by a fifth clutch. To obtain reverse gear range the fifth and second clutches are engaged.

The invention will now be described in detail with reference to the accompanying diagrammatic drawings in which:-

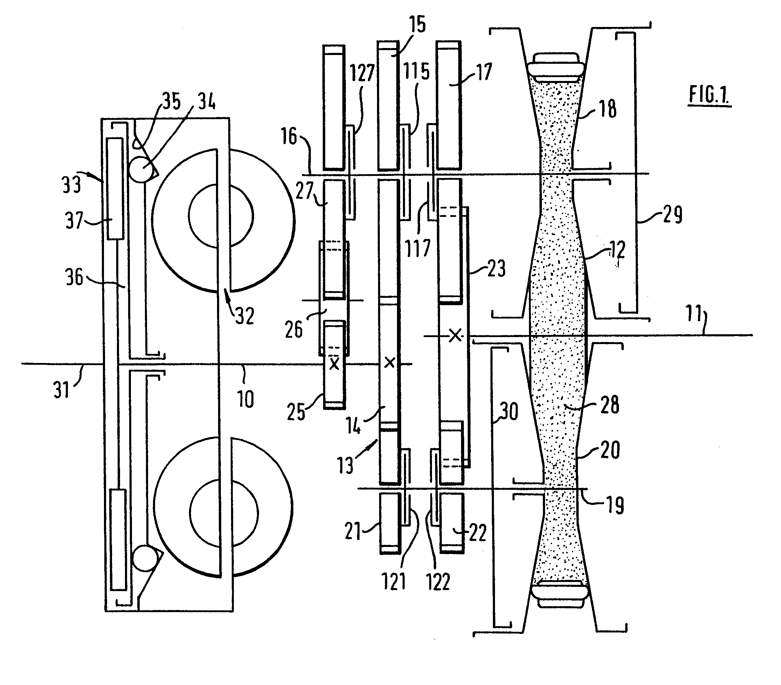

Figure 1 is a diagram illustrating a continuously variable transmission mechanism embodying the invention; and

Figure 2 is a diagram illustrating the drive path in a first forward mode;

Figure 3 is a diagram illustrating the drive path in a second forward mode; and

Figure 4 is a diagram illustrating the drive path in reverse.

An input shaft 10 carries an input gear 14 which is fixed to the shaft and which meshes with a first gear 15 on a first intermediate shaft 16. The gear 15 may be clutched to and declutched from the shaft 16 by a first clutch 115. The shaft 16 also carries a fourth gear 17 which can be clutched to, and declutched from, the shaft 16 by a fourth clutch 117. The first sheave 18 of a variator 12 is secured to the first intermediate shaft 16.

The second sheave 20 of the variator is secured to a second intermediate shaft 19. The second intermediate shaft carries a third gear 21 which meshes with the input gear 14 and can be clutched to and declutched from the shaft 19 by a clutch 121. A second gear 22 is carried by the shaft 19 and is clutchable to and declutchable from the second intermediate shaft 19 by a second clutch 122. An output shaft 11 carries an output gear 23 which meshes with the fourth gear 17 and the second gear 22.

In the particular example shown, the first gear, fourth gear and output gear each have 59 teeth while the input gear and each of the second and third gears have 27 teeth. It follows that the reduction ratio between the input gear 14 and the first gear 15 and between the second gear 22 and the output gear 23 is 2.185. The ratio between the input shaft 10 and the second intermediate shaft 19 via the gears 14 and 21 is 1:1 and the ratio between the first intermediate shaft 16 and the output shaft 11 via the gears 17 and 23 is also 1:1.

The variator is arranged to give equal reduction and step-up ratios on either side of 1:1. This ratio is equal to the reduction ratio mentioned above of 2.185 and may be expressed as a range of ratios from 2.185 to 0.458.

To provide a range of reverse ratios, the input shaft 10 carries a further gear 25 which meshes with a reversing idler gear 26 which in turn drives a fifth gear 27 mounted on the first intermediate shaft 15 and clutchable to and declutchable from said shaft by a fifth clutch 127.

The output shaft 11 passes through the loop of the flexible drive band 28 of the variator between the variator sheaves 18 and 20. The sheaves are provided with means for varying their effective diameters shown diagrammatically as piston and cylinder devices 29 and 30.

The input shaft 10 may be driven from a prime mover shaft 31 via a fluid coupling 32 having a centrifugal lock-up clutch 33. The lock-up clutch has a plurality of weights 34 which, at a predetermined speed, move outwardly against ramps 35 and engage a pressure plate 36 with a clutch plate 37.

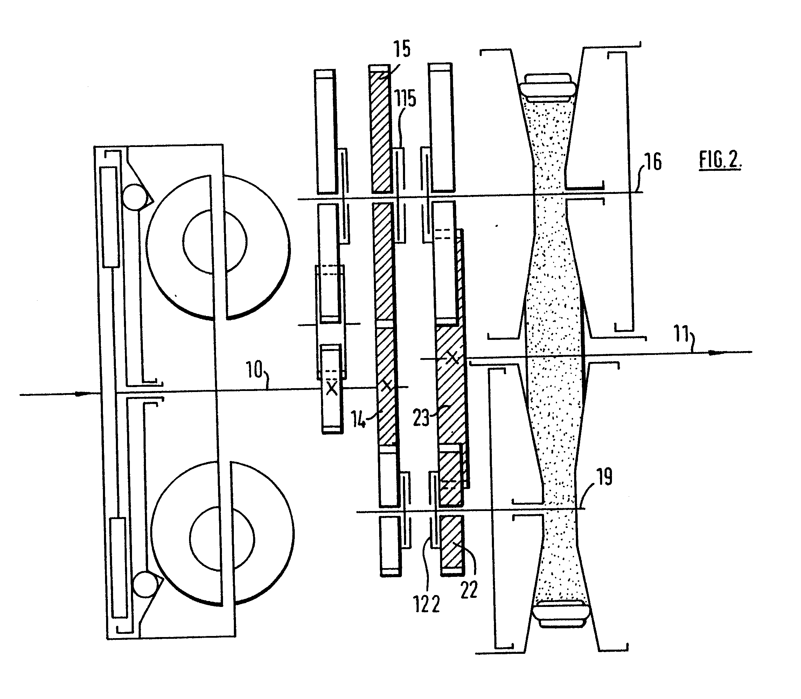

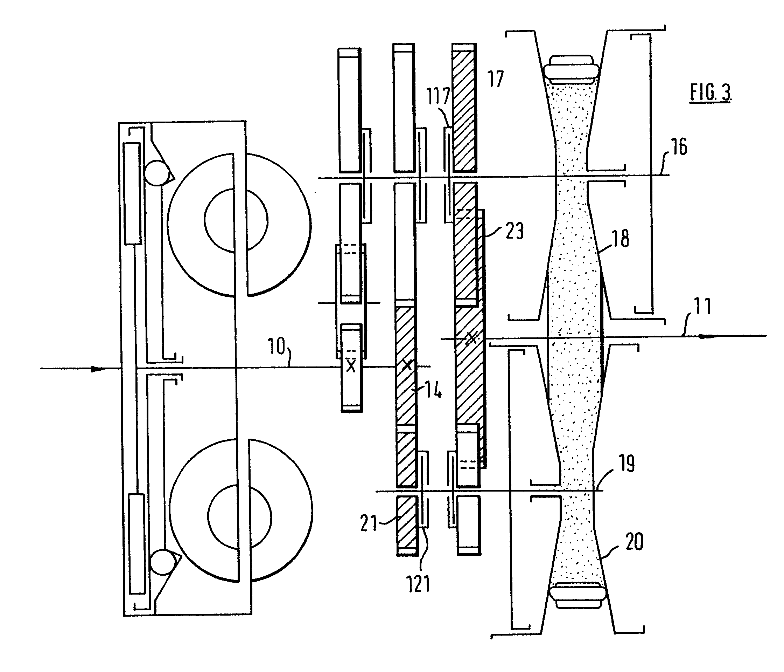

Figure 2 shows the drive path in a first mode of forward movement giving a low range of ratios. The drive is through those gears which are shaded and the arrows indicate the drive path. This in this mode the first gear 15 is clutched to the first intermediate shaft 16 and the second gear 22 is clutched to the second intermediate shaft 19, the third, fourth and fifth gears being declutched from their respective shafts. Thus the drive passes from the input shaft 10 via the input gear 14 and the first gear 15 to the first intermediate shaft at a reduction ratio of 2.185. The first intermediate shaft drives the first variator sheave 18 which in turn drives the second variator sheave 20. The sheave 20 in turn drives gear 22 which meshes with output gear 23. As the variator ratio is varied between 2.185 and 0.458 the overall ratio varies from 10.43 to 2.185. To obtain a higher ratio than the 2.185 reduction it is necessary to operate the mechanism in the second mode. To achieve this, the gears 15 and 22 are declutched from their shafts and the gears 17 and 21 are clutched to their shafts to produce the situation as shown in Figure 3. Drive now passes from the input shaft 10 to the input gear 14, to the second gear 21, to the second intermediate shaft 19, to the variator sheave 20, the variator sheave 18, to the first intermediate shaft 16, to the fourth gear 17 to the output gear 23 and to the output shaft 11. The overall ratio remains unchanged because the drive through the variator is reversed and the previous ratio of 0.458 effectively becomes a reduction ratio of 2.185. This reduction ratio, in conjunction with 1:1 ratios between gears 14 and 21 and gears 17 and 23 retains an overall ratio of 2.185. To increase the ratio in the second mode of operation, the variator is adjusted towards its maximum overdrive ratio so that the overall ratio between the input shaft 10 and the output shaft 11 can be varied from 2.185 to 0.458:1.

At the change in mode, the first to fourth gears 15, 22, 21 and 17 all rotate at the same speeds as their shafts so that a synchronous change of mode takes place.

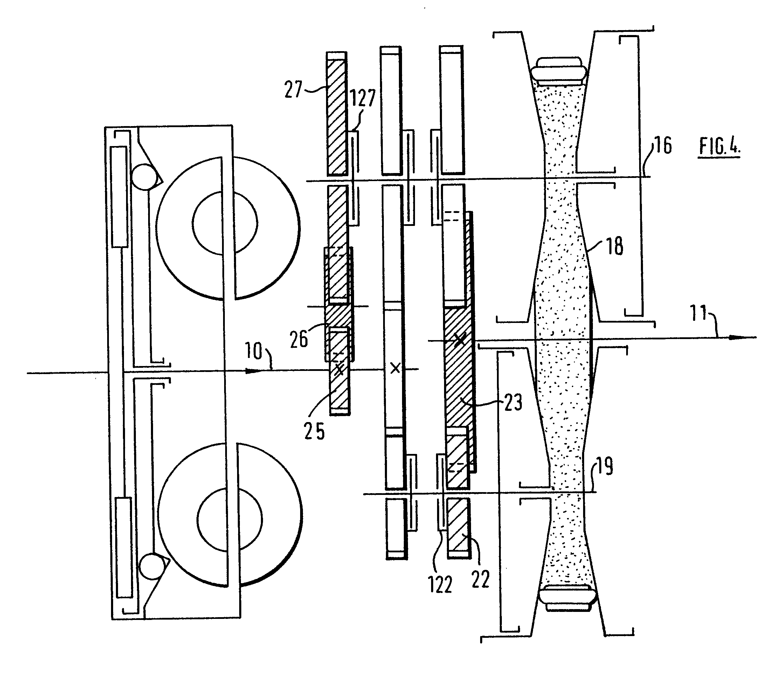

Reverse is obtained as shown in Figure 4 by clutching the fifth gear 27 to the first intermediate shaft 16 and by clutching the second gear 22 to the second intermediate shaft 19, the first, third and fourth gears being declutched. The drive thus passes from the input shaft 10 to gear 25, the idler gear 26 which reverses the direction of rotation, to gear 27 and thus via the variator to the gear 22 and the output gear 23 to the output shaft 11. Again there is available a low range of ratios corresponding broadly to the first forward mode, but possibly with slightly lower ratios depending on the numbers of teeth on gears 25 and 27.

The fluid coupling 32 is used, in effect as a starting clutch and when a high speed is reached, the centrifugal clutch 33 comes into operation.

ORIGINAL

0004412

CLAIMS

1.  A continuously variable transmission mechanism of the kind incorporating an input member (10) a variator (12) having first and second sheaves (18) and (20) of variable diameters and a flexible band connecting the sheaves together and having a maximum usable transmission ratio at one extreme of $1/R_v$, an output member (11), selectively engageable fixed ratio transmission paths between the input member and the variator and between the variator and the output member to enable the transmission mechanism to operate in different modes to extend the ratio range of the mechanism beyond the ratio range of the variator and to permit synchronous ratio changes from one mode to another characterised in that the selectively engageable fixed ratio transmission paths include a first path (14, 15, 115) of ratio $R_1$ from the input to the first variator sheave for use in conjunction with a second path (122, 22, 23 ) from the second variator sheave to the output, a third path (14, 21, 121) from the input member to the second variator sheave to be used in conjunction with a fourth path (117, 17, 23) of ratio $R_4$ from the first variator sheave to the output, the ratios $R_1$ to $R_4$ being such that $R_1$ $1/R_v$ $R_2$ = $R_3$ $R_v$ $R_4$ so that a change from a first mode of operation using the first and second paths to a second mode of operation using the third and fourth paths can occur at a variator ratio $1/R_v$ without change in the overall transmission ratio.

2.  A transmission mechanism as claimed in Claim 1 characterised in that $R_1$ = $R_2$ = $R_v$ and $R_3$ = $R_4$ = 1.

3.  A transmission mechanism as claimed in Claim 1 or Claim 2 characterised in that the range of usable variator ratios is from $1/R_v$ to $R_v$.

4.  A transmission mechanism as claimed in any preceding claim characterised in that the four paths respectively are constituted by (a) a first gear (15) co-axial with the first sheave, connectable thereto by a first clutch (115) and meshing with an input gear (14); (b) a second gear (22) co-axial with the second sheave, connectable thereto by a second clutch (122) and meshing with an output gear (23); (c) a third gear (21) co-axial with the second sheave, connectable thereto by a third clutch (121) and meshing with the input gear (14); (d) a fourth gear (17) co-axial with the first sheave, coupled thereto by a fourth clutch (117) and meshing with the output gear (23).

5. A transmission mechanism as claimed in Claim 4 characterised in that the output gear is arranged on an output shaft which extends between the two sheaves.

6. A transmission mechanism as claimed in any preceding claim characterised by the provision of a fluid coupling at the input to the mechanism.

7. A transmission mechanism as claimed in any preceding claim characterised by the provision of a reverse drive by means of a further gear (25) on the input member meshing via a reversing idler gear (26) with a fifth gear (27) which is co-axial with the first variator sheave and connectable thereto by a fifth clutch (127).

FIG.1.

FIG.2.

15

115

16

11

10

14

23

19

122

22

2/4

00004412

FIG. 3

FIG.4.

**0004412**
Application number
EP 79 300 081.1

## EUROPEAN SEARCH REPORT

European Patent Office

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | <u>DE - C - 818 300</u> (REIMERS)<br>* claims 1 and 2; fig. 1 *<br><br>-- | 1,2,<br>3,4 | F 16 H 37/00<br>F 16 H 3/08<br>F 16 H 3/38 |
| | <u>DE - U - 7 134 592</u> (BROWN)<br>* fig. 1, positionen 16, 17 *<br><br>-- | 6 | |
| A | <u>CH - A - 249 559</u> (OERLIKON)<br>* whole document *<br><br>-- | 1 | |
| A | <u>CH - A - 243 182</u> (OERLIKON)<br>* whole document *<br><br>-- | 1 | TECHNICAL FIELDS SEARCHED (Int.Cl.²)<br><br>F 16 H 3/00<br>F 16 H 37/00 |
| A | <u>GB - A - 1 128 873</u> (DEERE)<br>* whole document *<br><br>-- | 1 | |
| D | <u>US - A - 3 340 749</u> (A. MAGG et al)<br>* whole document *<br><br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 06-04-1979 | KÜHNE |

EPO Form 1503.1  06.78